(19) Europäisches Patentamt
European Patent Office
Office européen des brevets

(11) EP 4 538 341 A1

(12) EUROPEAN PATENT APPLICATION

(43) Date of publication:
16.04.2025 Bulletin 2025/16

(21) Application number: 23203495.9

(22) Date of filing: 13.10.2023

(51) International Patent Classification (IPC):
*C09D 11/54* (2014.01) *C09D 11/38* (2014.01)
*C09D 11/40* (2014.01)

(52) Cooperative Patent Classification (CPC):
C09D 11/54; C09D 11/38; C09D 11/40

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: Canon Production Printing Holding B.V.
5914 HH Venlo (NL)

(72) Inventors:
- SCHELL, Jeroen A.
Venlo (NL)
- VAN KEULEN, Luc
Venlo (NL)
- TURKENBURG, Daniël H.
Venlo (NL)

(74) Representative: Canon Production Printing IP Department
Canon Production Printing Netherlands B.V.
Van der Grintenstraat 10
5914 HH Venlo (NL)

# (54) FOOD SAFE AQUEOUS INKJET COMPOSITIONS

(57) The present invention relates to a pre-treatment liquid for use in inkjet printing applications comprising a polyvalent metal itaconate salt. The invention further relates to the use of polyvalent metal itaconate salt or a polyvalent metal succinic salt as a food-safe, non-smelling, non-yellowing coagulation agent in a pre-treatment liquid for use in inkjet printing. The present invention also relates to a method of printing comprising the steps of treating a print substrate by applying a pre-treatment liquid according to the present invention followed by applying an aqueous ink composition onto the treated print substrate.

EP 4 538 341 A1

## Description

FIELD OF THE INVENTION

The present invention relates to inkjet imaging materials suitable to be used in food contact applications, e.g. for printing on (food) packaging. In particular the present invention relates to food safe pre-treatment liquids that can be applied onto a recording substrate by means of an ink-jet imaging device. Pre-treatment liquids provide improved interaction of the ink composition and the print substrate to improve image quality and print robustness by pinning colorant particles to the print substrate's surface and by sufficient spreading of the ink composition on the pre-treated surface. The pre-treatment liquid itself should have a good spreading property when applying it by ink-jet printing. The present invention further relates to an inkjet printing method comprising applying the pre-treatment liquid of the invention on a recording medium prior to printing an ink-jet image and a method of pre-treating a recording medium, comprising pre-treating a recording medium with a pre-treatment liquid of the invention.

BACKGROUND ART

For improving image quality in ink-jet printing, pre-treatment liquid compositions have been used to improve the interaction between the recording medium and the inks.

Pre-treatment liquid compositions normally contain salt compositions with acidic and/or electrophilic properties to destabilize pigment color particles. As a result, the behavior of the pigment particles upon drying of the printed medium is optimized. Uncontrollable ink drop coalescence ('puddling') and color bleed is prevented, and the optical color density improved.

The pre-treatment liquids comprising a (multivalent) metal salt usually comprise a conjugate base of acids or a halide as an anion.

Pre-treatment liquids, also termed reaction liquids/solutions, primer liquids, (pretreatment compositions, processing liquids or ink-receiving solutions, comprising multivalent metal salts are known from the prior art, for example from: US2008/0092309 pertains to ink-jet printing on fabric and to a pretreatment solution for the fabric that allows high quality printing thereon. The aqueous pretreatment solution/emulsion comprises a nonionic latex polymer and a multivalent cationic salt.

In US2007/0054981, an ink set comprising an ink containing at least an organic pigment, a water-soluble organic solvent and water and a treating liquid which is applied to a recording medium before applying the ink to the recording medium and produces an agglomerate upon contact with the ink, the ink containing a low molecular weight dispersant having a molecular weight of 2000 or lower and polymer fine particles is described.

The pre-treatment composition for ink-jet printing disclosed in US 2012/0314000 comprises: a liquid vehicle, a fixing agent, a non-ionic defoaming surfactant, a surface tension reducing surfactant, and a latex resin having an acid number of less than 20. Published US Patent Application 2012/0019588 discloses fixer fluids, for ink-jet printing comprising a metal carboxylate salt as a fixer agent. In particular calcium acetate, calcium propionate, calcium butyrate, calcium bromide, calcium carbonate, calcium chloride, calcium citrate, calcium cyanamide, calcium phosphate, calcium lactate, calcium nitrate, calcium oxalate and calcium sulfate are disclosed as fixer agents.

Published US Patent Application 2014/0055520 discloses an ink-receiving solution comprising at least one metal salt. In particular calcium chloride.

In high-speed printing on a wide variety of different print substrates (media) it is desired to apply thin layers of pre-treatment liquid to minimize the total liquid load (e.g. combined pre-treatment layer and ink layer) on the surface of the print substrate. This requirement provides energy efficient drying and fixation of the combined liquid layer and prevents or at least mitigates deformation of the print substrates due to high liquid loads.

To enable thin layers of pre-treatment liquid that are still effective in preventing (inter color) bleeding, pre-treatment liquids with high concentrations of coagulation agents, in particular (polyvalent) metal salts, are required.

Commonly used (polyvalent) metal salts in pre-treatment liquids known in the prior art comprise anions (such as chloride, acetate, or nitrate) that are unsuitable to be used in inkjet printing application because of either their corrosive behavior in contact with (parts of) the print engine, or due to their (unpleasant) smell during printing and of the printed matter, or due to the yellowing of the printed matter upon exposure to (natural) UV-radiation. Furthermore, some of the commonly used (polyvalent) metal salts in pretreatment liquids cannot be safely used in food contact applications. Other disadvantages of commonly used (polyvalent) metal salts in pre-treatment liquids known in the prior art are incompatibility with other components used in pre-treatment liquids, such as surfactants and lack of stability of pre-treatment liquids comprising such salts, leading to limited shelf-life.

It is therefore object of the present invention to provide a pre-treatment liquid for use in inkjet printing applications that can be safely used in food contact applications and shows non-yellowing and non-smelling properties.

## SUMMARY OF THE INVENTION

This object is at least partially achieved by providing pre-treatment liquids according to the present invention.

At least in the context of the present application, Food Contact Materials (FCM) are materials that can be safely used in direct or indirect contact with food, e.g. food packaging.

In a first aspect the invention relates to a pre-treatment liquid for use in inkjet printing applications comprising a polyvalent metal itaconate salt.

In an embodiment the polyvalent itaconate salt is magnesium itaconate.

A polyvalent metal salt of itaconic acid, i.e. a polyvalent metal itaconate complies with the Food Contact Material regulations, provided that the polyvalent metal ion does too. Such salts are non-smelling and non-yellowing.

In an embodiment, the polyvalent metal itaconate salt is present in an amount of between 10 wt% and 60 wt%, preferably between 15 w% and 50 wt%, more preferably between 20 wt% and 40 wt% relative to the total aqueous inkjet composition.

In another aspect the invention relates to the use of polyvalent metal itaconate salt or a polyvalent metal succinate as a food-safe, non-smelling and non-yellowing coagulation agent in a pre-treatment liquid for use in inkjet printing.

In another aspect the invention relates to a method of printing comprising the steps of:

a. treating a print substrate by applying a pre-treatment liquid according to any embodiment of the present invention onto a surface of the print substrate;
b. subsequently applying an aqueous ink composition comprising an aqueous resin dispersion and/or a colorant onto the treated print substrate obtained in step a.

In principle, the aqueous ink composition may be any aqueous ink composition as long as it comprises at least one component that shows an interaction with the aqueous ink-jet composition according to the first aspect of the present invention that is applied in step a. Examples of such components are aqueous resin dispersions and colorant dispersions, in particular charge stabilized (ionically stabilized) pigment dispersions. The interaction may be a coagulation of dispersed colorant (pigment) particles with the purpose of pinning the pigment particles to the print substrate.

In conclusion, a (polyvalent) metal itaconate salt can be used as Food Contact Material in a pre-treatment liquid to the present inventions. Such composition provides non-smelling and non-yellowing properties.

## BRIEF DESCRIPTION OF THE DRAWINGS

The present invention will become more fully understood from the detailed description given herein below and accompanying schematical drawings which are given by way of illustration only and are not limitative of the invention, and wherein:

Fig. 1 shows a schematic representation of an ink-jet printing system.

Fig. 2 shows a schematic representation of an ink-jet marking device: A) and B) assembly of ink-jet heads; C) detailed view of a part of the assembly of ink-jet heads.

## DETAILED DESCRIPTION

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

In the present specification, amounts of a substance are usually given as mass percent (m%, wt%), unless noted otherwise or clear from the context.

**Recording/Receiving media (print substrates)**

Suitable recording media for use in a printing process using an ink or set of inks (e.g. Cyan, Magenta, Yellow and blacK, CMYK) according to the present invention are not particularly limited to any type. The receiving medium may be suitably selected depending on the intended application.

Suitable receiving media may range from strongly water absorbing media such as plain paper (for example Oc6 Red Label) to non-water-absorbing media such as plastic sheets (for example PE, PP, PVC, and PET films). To optimize print quality, ink-jet coated media are known, which media comprise a highly water absorbing coating.

Of particular interest in the context of the present invention are Machine Coated (MC) media (also known as offset coated media) and glossy (coated) media, particularly MC media. MC media are designed for use in conventional printing processes, for example offset printing and show good absorption characteristics with respect to solvents used in inks used in such printing processes, which are usually organic solvents. MC and glossy media show inferior absorption behavior with respect to water (worse than plain paper, better than plastic sheets), and hence aqueous inks.

The present invention relates to aqueous inkjet compositions that are suitable to be used in food contact applications, e.g. food packaging. Commonly used food packaging materials and hence print substrates are corrugated and solid bleached sulfate papers and boards.

**Aqueous ink-jet composition**

An aqueous ink-jet composition as defined in the present application may be any aqueous functional liquid that is applied to a print substrate by means of an ink-jet process, for example a pre-treatment liquid (primer), an ink composition, a maintenance liquid, a varnish, etc.

The present invention basically relates to such aqueous ink-jet compositions, comprising Food Contact Material (FCM) surfactants and co-surfactants. Aqueous ink-jet compositions according to the present invention further comprise water and at least one component selected from the group consisting of a multivalent metal salt, a cosolvent, pH-regulator, aqueous resin dispersion and a colorant. Some of these components are dedicated to being used in a pre-treatment liquid (such as multivalent metal salt) or in an ink composition (such as colorant). Other components may have a more general use in aqueous ink-jet compositions. Below, the more generally used components will be described first, followed by components dedicated for pre-treatment liquids and ink compositions.

Solvent

Water is cited as an environmentally friendly and hence desirable solvent.

Cosolvents

To meet jettability requirements, cosolvents may be added to the aqueous ink-jet composition. Cosolvents may have multiple functions, e.g. adapting the rheological behavior (e.g. viscosity) of the aqueous ink-jet composition and/or preventing drying of the aqueous ink-jet composition in the imaging device or on the nozzle surface of the imaging device, which drying may lead to precipitation of solutes present in the aqueous ink-jet composition in the imaging device or on the nozzle surface (nozzle plate).

Cosolvents may also be used to improve penetration of the main solvent (water) into the print substrate, such cosolvents are also termed penetrants.

Cosolvents may also have surface active properties and may be used as (co-)surfactants to tune the surface tension of aqueous ink-jet compositions, including inks and pre-treatment liquids.

The type of cosolvents used is not limited to any kind, as long as the effect of the present invention is preserved.

Examples of suitable cosolvents are water-soluble organic solvents such as polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, and ethylene carbonate.

Also, more than one cosolvent can be used in combination in the aqueous ink-jet composition according to the present invention. Suitable water-soluble organic solvents listed below.

Examples of water-soluble organic solvents include (but are not limited to): glycerin (also termed glycerol), propylene glycol, dipropylene glycol, tripropylene glycol, tetrapropylene glycol, polypropylene glycol, ethylene glycol, diethylene glycol, triethylene glycol, tetraethylene glycol, polyethylene glycols preferably having a molecular weight of between 200 gram/mol and 1000 gram/mol (e.g. PEG 200, PEG 400, PEG 600, PEG 800, PEG 1000), glycerol ethoxylate, pentaerythritol ethoxylate, polyethylene glycol (di)methylethers preferably having a molecular weight of between 200 gram/mol and 1000 gram/mol, tri-methylol-propane, diglycerol (diglycerin), trimethylglycine (betaine), N-methylmorpholine N-oxide, decaglyserol, 1,4-butanediol, 1,3-butanediol, 1,2,6-hexanetriol, 2-pyrrolidinone, dimethylimidazolidinone,

ethylene glycol mono-butyl ether, diethylene glycol monomethyl ether, diethylene glycol monoethyl ether, diethylene glycol mono-propyl ether, diethylene glycol mono-butyl ether, triethylene glycol monomethyl ether, triethylene glycol monoethyl ether, triethylene glycol mono-propyl ether, triethylene glycol mono-butyl ether, tetraethylene glycol monomethyl ether, tetraethylene glycol monoethyl ether, propylene glycol monobutyl ether, dipropylene glycol monomethyl ether, dipropylene glycol monoethyl ether, dipropylene glycol monopropyl ether, diethylene glycol monobutyl ether, tripropylene glycol monomethyl ether, tripropylene glycol monoethyl ether, tripropylene glycol monopropyl ether, tripropylene glycol monobutyl ether, tetrapropylene glycol monomethyl ether, diethylene glycol diethyl ether, diethylene glycol dibutyl ether, triethylene glycol diethyl ether, triethylene glycol dibutyl ether, dipropylene glycol dibutyl ether, tri propylene glycol dibutyl ether, 3-methyl 2,4-pentanediol, diethylene-glycol-monoethyl ether acetate, 1,2-hexanediol, 1,2-pentanediol and 1,2-butanediol.

In the context of the present invention alkyl glycol mono alkyl ethers such as ethylene glycol mono-butyl ether, diethylene glycol monoethyl ether, diethylene glycol mono-butyl ether, dipropylene glycol monomethyl ether and tripropylene glycol monobutyl ether have been proven to be suitable co-surfactants in certain compositions, which will be further elucidated in the experimental part.

In an embodiment, a mixture of the water-soluble organic solvents may be comprised in an aqueous ink-jet composition according to the present invention. The individual organic solvents preferably being present in an amount of 1 weight% to 40 weight%, more preferably in an amount of 3 weight% to 30 weight%, even more preferably in an amount of 5 weight% to 20 weight%, relative to the total aqueous ink-jet composition.

pH-regulators

pH-regulators may be added to the aqueous ink-jet composition to optimize the pH of the pre-treatment liquid to meet the pH requirements specified for the used print head. In general, the pH specification of the print head is in the alkaline region (i.e. pH > 7). Therefore, alkaline pH-regulators are preferred. Examples of suitable pH-regulators are (but are not limited to): NaOH, KOH, ammonia, (secondary and tertiary) amines, amino alcohols, in particular N-alkyl-dialkanolamines. Specific examples of suitable amino alcohols are: triethanolamine, N-metyldiethanolamine, N-ethyldiethanolamine, N-n-butyl-monoethanolamine and N-n-butyl-diethanolamine.

An example of an acidic pH regulator is acetic acid (Hac).

Examples of food-safe pH-regulators are (but not limited to): acetic acid (Hac), tri-isopropanol amine, triethanolamine and N,N,N',N'-tetrakis(2-hydroxypropyl)ethylenediamine (quadrol).

Usually pH-regulators are present in a small amount in the aqueous ink-jet composition, in particular less than 1 wt% with respect to the total pre-treatment liquid composition. However, pH-regulators can be suitably applied in any amount until the desired pH has been reached and as long as the effect of the present invention is preserved.

Surfactants / Co-surfactants

Surfactants may be added to an aqueous ink-jet composition to improve the spreading behavior (wettability) of the aqueous ink-jet composition on the print substrate for controlling the image density and color saturation of the formed image and for reducing white spots in the printed image.

Surfactants are not only necessary to control the spreading of the aqueous ink-jet compositions (e.g. ink and pre-treatment liquid) on the print substrate, but also to improve the jetting properties of these compositions. Without surfactants present in these ink-jet imaging materials, the surface tension would be too high to enable proper application by ink-jet printing.

Using surfactants, the surface tension, i.e. the dynamic surface tension as well as the static surface tension, can be adjusted.

To be effective in an aqueous ink-jet composition (e.g. ink and pre-treatment liquid), a surfactant does not only need to reduce the surface tension of the ink-jet imaging material significantly, but it also needs to act very fast, and it needs to be stable and compatible with the other components of the aqueous ink-jet composition.

Examples of suitable surfactants are not limited to any kind, as long as the effect of the present invention is preserved. In practice only a handful of products meets these basic criteria.

For the sake of completeness examples of commonly used surfactants are listed below. The main disadvantage of these surfactants is that most of them do not qualify as Food Contact Material.

Examples of commonly used surfactants include nonionic surfactants, such as acetylene surfactants, cationic surfactants, anionic surfactants, amphoteric surfactants, in particular betaine surfactants.

Examples of a cationic surfactant include aliphatic amine salts, aliphatic quaternary ammonium salts, benzalkonium salts, benzethonium chloride, pyridinium salts, imidazolinium salts.

Examples of an anionic surfactant include: polyoxyethylene alkylether acetic acid salts, dodecylbenzene sulfonic acid salts, lauric acid salts, and salts of polyoxyethylene alkylether sulfate, an aliphatic acid soap, an N-acyl-N-methyl

glycin salt, an N-acyl-N-methyl-β-alanine salt, an N-acylglutamate, an acylated peptide, an alkylsulfonic acid salt, an alkylbezenesulfonic acid salt, an alkylnaphthalenesulfonic acid salt, a dialkylsulfo succinate (e.g. sodium dioctyl sulfosuccinate (DSS); alternative names: docusate sodium, Aerosol OT and AOT), alkylsulfo acetate, α-olefin sulfonate, N-acylmethyl taurine, a sulfonated oil, a higher alcohol sulfate salt, a secondary higher alcohol sulfate salt, an alkyl ether sulfate, a secondary higher alcohol ethoxysulfate, a polyoxyethylene alkylphenyl ether sulfate, a monoglysulfate, an aliphatic acid alkylolamido sulfate salt, an alkyl ether phosphate salt and an alkyl phosphate salt.

Examples of an amphoteric surfactant include: a carboxybetaine type, a sulfobetaine type, an aminocarboxylate salt and an imidazolium betaine.

Examples of a nonionic surfactant include: polyoxyethylene alkylether, polyoxypropylene polyoxyethylene alkylether, a polyoxyethylene secondary alcohol ether, a polyoxyethylene alkylphenyl ether, a polyoxyethylene sterol ether, a polyoxyethylenelanolin derivative polyoxyethylene polyoxypropylene alkyl ether, polyoxyethylene alkylester, a polyoxyethyleneglycerine aliphatic acid ester, a polyoxyethylene castor oil, a hydrogenated castor oil, a polyoxyethylene sorbitol aliphatic acid ester, a polyethylene glycols aliphatic acid ester, an aliphatic acid monoglyceride, a polyglycerine aliphatic acid ester, a sorbitan aliphatic acid ester, polyoxyethylene sorbitan aliphatic ester, a propylene glycol aliphatic acid ester, a cane sugar aliphatic acid ester, an aliphatic acid alkanol amide, polyoxyethylene alkylamide, a polyoxyethylene aliphatic acid amide, a polyoxyethylene alkylamine, an alkylamine oxide, an alcoxylated alcohol, an acetyleneglycol, an ethoxylated acetylene glycol, acetylene alcohol.

Ethoxylated acetylene glycols have a general structure as shown in Formula .

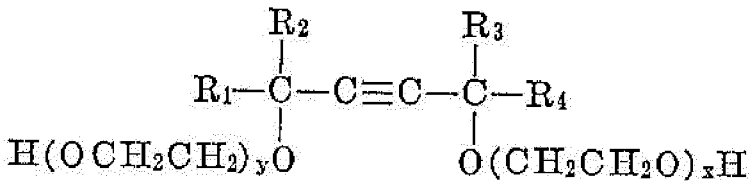

Formula 1

Wherein $R_1$ and $R_4$ are the same or different alkyl radicals having from 3-10, preferably from 3-6 carbon atoms, preferably $R_1$ and $R_4$ are the same and $R_2$ and $R_3$ are the same or different and selected from methyl and ethyl, preferably both $R_2$ and $R_3$ are methyl and x and y are both integers and have a sum in the range of between 1 and 60.

Specific examples of ethoxylated acetylene glycols are ethoxylated 3-methyl-1-nonyn-3-ol, ethoxylated 7,10-dimethyl-8-hexadecyne-7,10-diol, ethoxylated 4,7-dimethyl-5-decyne-4,7-diol, ethoxylated 2,4,7,9-tetramethyl-5-decyne-4,7-diol, and ethoxylated 2,5,8,1 1-tetramethyl-6-dodecyne-5,8-diol. These can be used in combination with each other.

Surfactants may be used separately and in combination of the plural.

(Other) Additives

The aqueous ink-jet composition may optionally further contain additives like biocides and/or a penetrant, which is a compound that promotes absorption of the ink composition in the print medium, and the additives are not particularly limited and comprise those usually used in aqueous ink-jet compositions.

**Pre-treatment liquid (primer)**

Pre-treatment liquids according to the present invention comprise a metal salt as an agent for destabilizing charge stabilized dispersed particles in ink compositions such as pigment particles and dispersed polymer particles. Destabilization of dispersed particles may cause coagulation of such particles and hence prevents (excessive) absorption of such particles into the print substrate. Adhesion of e.g. pigment particles to the surface of the print substrate may be promoted by destabilization of the dispersed pigment particles. In general, pre-treatment with pre-treatment liquids may significantly improve image quality and print robustness. Pre-treatment liquids may further comprise additives such as cosolvents, pH-regulators. Pre-treatment liquids according to the present invention can be suitable used on plain papers and machine coated (MC) papers, which are well known in the art.

Metal salts

Metal salts that can be suitably used in pre-treatment liquids according to the present invention comprise monovalent metal ions such as $Li^+$, $Na^+$, K+, $Hg^+$, $Cu^+$, $Ag^+$ and $Cs^+$. However, it is preferred that thin layers of the pre-treatment liquid can be applied to a print substrate, to prevent deformation of the print substrate (in particular paper-like

substrates) due to high liquid loading. Therefore, to provide an effective pre-treatment liquid in thin layers, a salt providing a relatively high ionic strength is preferred.

In the context of the present invention, ionic strength is defined in accordance with equation 1:

$$= \frac{1}{2} \times \qquad \times$$

equation 1

wherein:

I is the ionic strength in M (i.e. mol/l);
$c_i$ is the concentration of ion i;
$z_i$ is the valence of ion i;

For example, the ionic strength of a 0.5 mol/l $Na_2SO_4$ solution is:

$$0.5 * (2*0.5*(1)^2+1*0.5*(-2)^2) = 1.5 \text{ M}$$

Another criterion to be observed is that the solubility of the selected salt is high enough to be able to prepare an effective pre-treatment solution, e.g. a pre-treatment liquid that can be applied in thin layers (low liquid load) with a high salt content. For these reasons, multivalent metal ions are preferred, such as: $Ca^{2+}$, $Mg^{2+}$, $Sr^{2+}$, $Zn^{2+}$, $Cu^{2+}$, $Ni^{2+}$, $Ba^{2+}$, $Fe^{3+}$, $Cr^{3+}$ and $Al^{3+}$. Of these, $Mg^{2+}$ and $Ca^{2+}$ are most preferred for HSE reasons.

Suitable anions are not particularly limited, if the metal salt is soluble in water and the effects of the present invention are preserved. Examples of anions are halides (e.g. chloride), nitrate, sulfate, sulfamate and conjugated anions of organic acids, for example formate (formic acid), ascorbate (ascorbic acid), glutamate (glutamic acid), pidolate (pidolic acid), taurate (taurine), aspartate (aspartic acid), asparaginate (asparagine), glycinate (glycine), arginate (arginine).

In the context of the present invention, (polyvalent) metal salts of itaconic acid (itaconates) and (polyvalent) metal salts of succinic acid (succinates) are mentioned as a food safe coagulation agent (also termed crashing agents or destabilization agents).

Additionally, these (polyvalent) metal salts show non-smelling and non-yellowing properties. Therefore, (polyvalent) metal itaconates and (polyvalent) metal succinates are suitable alternatives for (polyvalent) metal sulfates and nitrates as destabilizing agents (coagulation agents) in pre-treatment liquids for use in (aqueous) inkjet printing.

In general, the pre-treatment liquids according to the present invention comprise between 10 wt% and 60 wt%, preferably between 15 w% and 50 wt%, more preferably between 20 wt% and 40 wt% of the multivalent metal salt, with reference to the total composition. The amount of salt is however limited to the maximum solubility of the salt. The saturation degree (actual concentration / maximum solubility *100%) of the salt in the pre-treatment liquid is in general between 10% and 100%, preferably between 15% and 95%, more preferably between 20% and 80%.

Ink

An ink composition according to the present invention is a water-based ink which is not particularly limited in composition and may comprise an aqueous resin dispersion (also termed latex), a colorant dispersion (e.g. a pigment dispersion), water, a cosolvent, a surfactant and a co-surfactant in accordance with the present invention and optionally other additives. In the ink, the amount of each component is not particularly limited as long as a printing ink is obtained.

Aqueous resin dispersion (latex)

Examples of the aqueous resin dispersion include synthetic resins and natural polymer compounds. Examples of the synthetic resins include polyester resins, polyurethane resins, polyepoxy resins, polyamide resins, polyether resins, poly(meth)acrylic resins, acryl-silicone resins, fluorine-based resins, polyolefin resins, polystyrene-based resins, polybutadiene-based resins, polyvinyl acetate-based resins, polyvinyl alcohol-based resins, polyvinyl ester-based resins, polyvinyl chloride-based resins, polyacrylic acid-based resins, unsaturated carboxylic acid-based resins and copolymers such as styrene - acrylate copolymer resins, styrene-butadiene copolymer resins. Examples of the natural polymer compounds include celluloses, rosins, and natural rubbers.

Examples of commercially available aqueous resin dispersions (emulsions) include: Joncryl 537 and 7640

(styrene-acrylic resin emulsion, made by Johnson Polymer Co., Ltd.), Microgel E-1002 and E-5002 (styrene-acrylic resin emulsion, made by Nippon Paint Co., Ltd.), Voncoat 4001 (acrylic resin emulsion, made by Dainippon Ink and Chemicals Co., Ltd.), Voncoat 5454 (styrene-acrylic resin emulsion, made by Dainippon Ink and Chemicals Co., Ltd.), SAE-1014 (styrene-acrylic resin emulsion, made by Zeon Japan Co., Ltd.), Jurymer ET-410 (acrylic resin emulsion, made by Nihon Junyaku Co., Ltd.), Aron HD-5 and A-104 (acrylic resin emulsion, made by Toa Gosei Co., Ltd.), Saibinol SK-200 (acrylic resin emulsion, made by Saiden Chemical Industry Co., Ltd.), and Zaikthene L (acrylic resin emulsion, made by Sumitomo Seika Chemicals Co., Ltd.), acrylic copolymer emulsions of DSM Neoresins, e.g. the NeoCryl product line, in particular acrylic styrene copolymer emulsions NeoCryl A-662, NeoCryl A-1131, NeoCryl A-2091, NeoCryl A-550, NeoCryl BT-101, NeoCryl SR-270, NeoCryl XK-52, NeoCryl XK-39, NeoCryl A-1044, NeoCryl A-1049, NeoCryl A-1110, NeoCryl A-1120, NeoCryl A-1127, NeoCryl A-2092, NeoCryl A-2099, NeoCryl A-308, NeoCryl A-45, NeoCryl A-615, NeoCryl BT-24, NeoCryl BT-26, NeoCryl BT-26, NeoCryl XK-15, NeoCryl X-151, NeoCryl XK-232, NeoCryl XK-234, NeoCryl XK-237, NeoCryl XK-238-NeoCryl XK-86, NeoCryl XK-90 and NeoCryl XK-95 However, the aqueous resin dispersion is not limited to these examples.

The resin of the aqueous resin dispersions may be in the form of a homopolymer, a copolymer or a composite resin, and all the resins having a monophase structure or core-shell structure and those prepared by power-feed emulsion polymerization may be used.

Colorant (dispersion)

A colorant dispersion may be a pigment or a mixture of pigments, a dye or a mixture of dyes or a mixture comprising pigments and dyes, if the colorant is water dispersed. The pigment is not particularly limited and may be suitably selected in accordance with the intended use.

Examples of the pigment usable include those commonly known without any limitation, and either a water-dispersible pigment or an oil-dispersible pigment is usable. For example, an organic pigment such as an insoluble pigment or a lake pigment, as well as an inorganic pigment such as carbon black, is preferably usable.

Examples of the insoluble pigments are not particularly limited, but preferred are an azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, or diketopyrrolopyrrole dye.

For example, inorganic pigments and organic pigments for black and color inks are exemplified. These pigments may be used alone or in combination. As the inorganic pigments, it is possible to use carbon blacks produced by a known method such as a contact method, furnace method and thermal method, in addition to titanium oxide, iron oxide, calcium carbonate, barium sulfate, aluminum hydroxide, barium yellow, cadmium red and chrome yellow.

As the organic pigments, it is possible to use azo pigments (including azo lake, insoluble azo pigments, condensed pigments, chelate azo pigments and the like), polycyclic pigments (e.g., phthalocyanine pigments, perylene pigments, perynone pigments, anthraquinone pigments, quinacridone pigments, dioxazine pigments, indigo pigments, thioindigo pigments, isoindolinone pigments, and quinophthalone pigments), dye chelates (e.g., basic dye type chelates, and acidic dye type chelates), nitro pigments, nitroso pigments, aniline black. Among these, particularly, pigments having high affinity with water are preferably used.

Specific pigments which are preferably usable are listed below.

Examples of pigments for magenta or red include: C.I. Pigment Red 1, C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 17, C.I. Pigment Red 22, C.I. Pigment Red 23, C.I. Pigment Red 31, C.I. Pigment Red 38, C.I. Pigment Red 48:1, C.I. Pigment Red 48:2 (Permanent Red 2B(Ca)), C.I. Pigment Red 48:3, C.I. Pigment Red 48:4, C.I. Pigment Red 49:1, C.I. Pigment Red 52:2; C.I. Pigment Red 53:1, C.I. Pigment Red 57:1 (Brilliant Carmine 6B), C.I. Pigment Red 60:1, C.I. Pigment Red 63:1, C.I. Pigment Red 64:1, C.I. Pigment Red 81. C.I. Pigment Red 83, C.I. Pigment Red 88, C.I. Pigment Red 101(colcothar), C.I. Pigment Red 104, C.I. Pigment Red 106, C.I. Pigment Red 108 (Cadmium Red), C.I. Pigment Red 112, C.I. Pigment Red 114, C.I. Pigment Red 122 (Quinacridone Magenta), C.I. Pigment Red 123, C.I. Pigment Red 139, C.I. Pigment Red 44, C.I. Pigment Red 146, C.I. Pigment Red 149, C.I. Pigment Red 166, C.I. Pigment Red 168, C.I. Pigment Red 170, C.I. Pigment Red 172, C.I. Pigment Red 177, C.I. Pigment Red 178, C.I. Pigment Red 179, C.I. Pigment Red 185, C.I. Pigment Red 190, C.I. Pigment Red 193, C.I. Pigment Red 209, C.I. Pigment Red 219 and C.I. Pigment Red 222, C.I. Pigment Violet 1 (Rhodamine Lake), C.I. Pigment Violet 3, C.I. Pigment Violet 5:1, C.I. Pigment Violet 16, C.I. Pigment Violet 19, C.I. Pigment Violet 23 and C.I. Pigment Violet 38.

Examples of pigments for orange or yellow include: C.I. Pigment Yellow 1, C.I. Pigment Yellow 3, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 24, C.I. Pigment Yellow 34, C.I. Pigment Yellow 35, C.I. Pigment Yellow 37, C.I. Pigment Yellow 42 (yellow iron oxides), C.I. Pigment Yellow 53, C.I. Pigment Yellow 55, C.I. Pigment Yellow 74, C.I. Pigment Yellow 81, C.I. Pigment Yellow 83, C.I. Pigment Yellow 93, C.I. Pigment Yellow 94, C.I. Pigment Yellow 95, C.I. Pigment Yellow 97, C.I. Pigment Yellow 98, C.I. Pigment Yellow 100, C.I. Pigment Yellow 101, C.I. Pigment Yellow 104, C.I. Pigment Yellow

408, C.I. Pigment Yellow 109, C.I. Pigment Yellow 110, C.I. Pigment Yellow 117, C.I. Pigment Yellow 120, C.I. Pigment Yellow 128, C.I. Pigment Yellow 138, C.I. Pigment Yellow 150, C.I. Pigment Yellow 151, C.I. Pigment Yellow 153 and C.I. Pigment Yellow 183; C.I. Pigment Orange 5, C.I. Pigment Orange 13, C.I. Pigment Orange 16, C.I. Pigment Orange 17, C.I. Pigment Orange 31, C.I. Pigment Orange 34, C.I. Pigment Orange 36, C.I. Pigment Orange 43, and C.I. Pigment Orange 51.

Examples of pigments for green or cyan include: C.I. Pigment Blue 1, C.I. Pigment Blue 2, C.I. Pigment Blue 15, C.I. Pigment Blue 15:1, C.I. Pigment Blue 15:2, C.I. Pigment Blue 15:3 (Phthalocyanine Blue), C.I. Pigment Blue 16, C.I. Pigment Blue 17:1, C.I. Pigment Blue 56, C.I. Pigment Blue 60, C.I. Pigment Blue 63, C.I. Pigment Green 1, C.I. Pigment Green 4, C.I. Pigment Green 7, C.I. Pigment Green 8, C.I. Pigment Green 10, C.I. Pigment Green 17, C.I. Pigment Green 18 and C.I. Pigment Green 36.

In addition to the above pigments, when red, green, blue, or intermediate colors are required, it is preferable that the following pigments are employed individually or in combination thereof. Examples of employable pigments include C.I. Pigment Red 209, 224, 177, and 194, C.I. Pigment Orange 43, C.I. Vat Violet 3, C.I. Pigment Violet 19, 23, and 37, C.I. Pigment Green 36, and 7, C.I. Pigment Blue 15:6.

Further, examples of pigments for black include C.I. Pigment Black 1, C.I. Pigment Black 6, C.I. Pigment Black 7, and C.I. Pigment Black 11. Specific examples of pigments for black color ink usable in the present invention include carbon blacks (e.g., furnace black, lamp black, acetylene black, and channel black); (C.I. Pigment Black 7) or metal-based pigments (e.g., copper, iron (C.I. Pigment Black 11), and titanium oxide; and organic pigments (e.g., aniline black (C.I. Pigment Black 1).

An exemplary printing process in an ink-jet printing apparatus of the present invention will now be described with reference to the appended drawings shown in Fig. 1 and Fig. 2. Figs. 1 and 2 show schematic representations of an ink-jet printing system and an ink-jet marking device, respectively. However, the present ink-jet printing process and ink-jet printing apparatus are not limited to this exemplary embodiment.

Fig. 1 shows that a sheet of a recording medium, in particular a machine coated medium, P, is transported in a direction for conveyance as indicated by arrows 50 and 51 and with the aid of transportation mechanism 12. Transportation mechanism 12 may be a driven belt system comprising one (as shown in Fig. 1) or more belts. Alternatively, one or more of these belts may be exchanged for one or more drums. A transportation mechanism may be suitably configured depending on the requirements (e.g. sheet registration accuracy) of the sheet transportation in each step of the printing process and may hence comprise one or more driven belts and/or one or more drums. For a proper conveyance of the sheets of receiving medium, the sheets need to be fixed to the transportation mechanism. The way of fixation is not particularly limited and may be selected from electrostatic fixation, mechanical fixation (e.g. clamping) and vacuum fixation.

The printing process as described below comprises the following steps: media pretreatment, image formation, drying and fixing and optionally post treatment.

## Media pre-treatment

To improve the spreading and pinning (e.g. fixation of colorant particles, in particulate pigments and water-dispersed resin (polymer) particles) of the ink on the recording medium, in particular on slow absorbing media, such as machine coated media, the recording medium is pre-treated, i.e. treated prior to printing an image on the medium.

The pre-treatment step comprises the application of the pre-treatment liquid of the present invention and may further comprise one or more of the following:

- preheating of the receiving medium to enhance spreading of the used ink on the receiving medium and/or to enhance absorption of the used ink into the receiving medium.

- corona or plasma treatment.

### *Primer pre-treatment*

As an application way of the pre-treatment liquid, any conventionally known methods can be used. Specific examples of an application way include: a roller coating, an ink-jet application, a curtain coating, and a spray coating.

Although application of the pre-treatment liquid by inkjet printing has become a common technique, exemplified in Fig. 1 is a roller coating (see 14 in Fig. 1) method. This coating method enables application of the pre-treatment liquid homogeneously to a recording medium. The amount of the applied pre-treatment liquid with a roller to a recording medium can be suitably adjusted by controlling: the physical properties of the pretreatment liquid; and the contact pressure of a roller in a roller coater to the recording medium and the rotational speed of a roller in a roller coater which is used for a coater of the pre-treatment liquid. With application of the pre-treatment liquid by inkjet printing, the required layer thickness of pre-treatment liquid can be controlled more easily.

As an application area of the pre-treatment liquid, it may be possible to apply only to the printed portion, or to the entire surface of both the printed portion and the non-printed portion.

*Corona or plasma treatment*

Corona or plasma treatment may be used as a pre-treatment step by exposing a sheet of a recording medium to corona discharge or plasma treatment. In particular when used on media like polyethylene (PE) films, polypropylene (PP) films, polyetyleneterephtalate (PET) films and machine coated media, the adhesion and spreading of the ink can be improved by increasing the surface energy of the media. With machine coated media, or more in general media with low surface energy, the absorption of water can be promoted which may induce faster fixation of the image and less puddling on the receiving medium. Surface properties of the receiving medium may be tuned by using different gases or gas mixtures as medium in the corona or plasma treatment. Examples are air, oxygen, nitrogen, carbon dioxide, methane, fluorine gas, argon, neon, and mixtures thereof. Corona treatment in air is most preferred.

Fig. 1 shows that the sheet of receiving medium P may be conveyed to and passed through a first pre-treatment module 13, which module may comprise a preheater, for example a radiation heater, a corona/plasma treatment unit, a gaseous acid treatment unit or a combination of any of the above. Subsequently, a predetermined quantity of the present pre-treatment liquid is applied on the surface of the receiving medium P at pre-treatment liquid applying member 14. Specifically, the pre-treatment liquid is provided from storage tank 15 of the pre-treatment liquid to the pre-treatment liquid applying member 14 composed of double rolls 16 and 17. Each surface of the double rolls may be covered with a porous resin material such as sponge. After providing the pre-treatment liquid to auxiliary roll 16 first, the pre-treatment liquid is transferred to main roll 17, and a predetermined quantity is applied on the surface of the recording medium P. Alternatively, the pre-treatment liquid can also be applied by one or more print heads (not shown). Subsequently, the coated printing paper P on which the pretreatment liquid was supplied may optionally be heated and dried by drying member 18 which is composed of a drying heater installed at the downstream position of the pretreatment liquid applying member 14 to decrease the quantity of the water content in the pre-treatment liquid to a predetermined range. In alternative embodiments, the drying step may be omitted. In particular when the pre-treatment liquid is applied with ink-jet printing (i.e. by ink-jet print heads). For such embodiments an additional ink-jet marking device may be implemented in the ink-jet marking module (11) and arranged upstream ink-jet marking device 114 (not shown, to the left of ink-jet marking device 114).

To prevent the transportation mechanism 12 being contaminated with pre-treatment liquid, a cleaning unit (not shown) may be installed and/or the transportation mechanism may be comprised of multiple belts or drums as described above. The latter measure prevents contamination of the upstream parts of the transportation mechanism, in particular of the transportation mechanism in the printing region.

Image formation

Image formation is performed in such a manner that, employing an ink-jet printer loaded with ink-jet inks, ink droplets are ejected from the ink-jet heads based on the digital signals onto a print medium.

Although both single pass ink-jet printing and multi pass (i.e. scanning) ink-jet printing may be used for image formation, single pass ink-jet printing is preferably used since it is effective to perform high-speed printing. Single pass ink-jet printing is an ink-jet recording method with which ink droplets are deposited onto the receiving medium to form all pixels of the image by a single passage of a recording medium underneath an ink-jet marking module.

In Fig. 1, 11 represents an ink-jet marking module comprising four ink-jet marking devices, indicated with 111, 112, 113 and 114, each arranged to eject an ink of a different color (e.g. Cyan, Magenta, Yellow and blacK). The nozzle density of each head may be 600 or 1200 npi. In the present invention, "npi" indicates the number of nozzles per inch (2.54 cm).

An ink-jet marking device for use in single pass ink-jet printing, 111, 112, 113, 114, has a length, L, of at least the width of the desired printing range, indicated with double arrow 52, the printing range being perpendicular to the media transport direction, indicated with arrows 50 and 51. The ink-jet marking device may comprise a single printhead having a length of at least the width of said desired printing range. The ink-jet marking device may also be constructed by combining two or more ink-jet heads, such that the combined lengths of the individual ink-jet heads cover the entire width of the printing range. Such a constructed ink-jet marking device is also termed a page wide array (PWA) of printheads. Fig. 2A shows an ink-jet marking device 111 (112, 113, 114 may be identical) comprising 7 individual ink-jet heads (201, 202, 203, 204, 205, 206, 207) which are arranged in two parallel rows, a first row comprising four ink-jet heads (201 - 204) and a second row comprising three ink-jet heads (205 - 207) which are arranged in a staggered configuration with respect to the ink-jet heads of the first row. The staggered arrangement provides a page wide array of nozzles which are substantially equidistant in the length direction of the ink-jet marking device. The staggered configuration may also provide a redundancy of nozzles in the area where the ink-jet heads of the first row and the second row overlap, see 70 in Fig. 2B. Staggering may further be used to decrease the nozzle pitch (hence increasing the print resolution) in the length

direction of the ink-jet marking device, e.g. by arranging the second row of ink-jet heads such that the positions of the nozzles of the ink-jet heads of the second row are shifted in the length direction of the ink-jet marking device by half the nozzle pitch, the nozzle pitch being the distance between adjacent nozzles in an ink-jet head, $d_{nozzle}$ (see Fig. 2C, which represents a detailed view of 80 in Fig. 2B). The resolution may be further increased by using more rows of ink-jet heads, each of which are arranged such that the positions of the nozzles of each row are shifted in the length direction with respect to the positions of the nozzles of all other rows.

In image formation by ejecting an ink, an ink-jet head (i.e. printhead) employed may be either an on-demand type or a continuous type ink-jet head. As an ink ejection system, there may be usable either the electric-mechanical conversion system (e.g., a single-cavity type, a double-cavity type, a bender type, a piston type, a shear mode type, or a shared wall type), or an electric-thermal conversion system (e.g., a thermal ink-jet type, or a Bubble Jet type (registered trade name)). Among them, it is preferable to use a piezo type ink-jet recording head which has nozzles of a diameter of 30 μm or less in the current image forming method.

Fig. 1 shows that after pre-treatment, the receiving medium P is conveyed to upstream part of the ink-jet marking module 11. Then, image formation is carried out by each color ink ejecting from each ink-jet marking device 111, 112, 113 and 114 arranged so that the whole width of the receiving medium P is covered.

Optionally, the image formation may be carried out while the recording medium is temperature controlled. For this purpose a temperature control device 19 may be arranged to control the temperature of the surface of the transportation mechanism (e.g. belt or drum) underneath the ink-jet marking module 11. The temperature control device 19 may be used to control the surface temperature of the recording medium P, for example in the range of 30°C to 60°C. The temperature control device 19 may comprise heaters, such as radiation heaters, and a cooling means, for example a cold blast, to control the surface temperature of the receiving medium within said range. Subsequently and while printing, the receiving medium P is conveyed to the downstream part of the ink-jet marking module 11.

Drying and fixing

After an image has been formed on the receiving medium, the prints have to be dried and the image has to be fixed onto the receiving medium. Drying comprises the evaporation of solvents, in particular those solvents that have poor absorption characteristics with respect to the selected recording medium.

Fig. 1 schematically shows a drying and fixing unit 20, which may comprise a heater, for example a radiation heater. After an image has been formed, the print is conveyed to and passed through the drying and fixing unit 20. The print is heated such that solvents present in the printed image, to a large extent water, evaporate. The speed of evaporation and hence drying may be enhanced by increasing the air refresh rate in the drying and fixing unit 20. Simultaneously, film formation of the ink occurs, because the prints are heated to a temperature above the minimum film formation temperature (MFT). The residence time of the print in the drying and fixing unit 20 and the temperature at which the drying and fixing unit 20 operates are optimized, such that when the print leaves the drying and fixing unit 20 a dry and robust print has been obtained. As described above, the transportation mechanism 12 in the fixing and drying unit 20 may be separated from the transportation mechanism of the pre-treatment and printing section of the printing apparatus and may comprise a belt or a drum.

EXAMPLES

**Materials**

All chemicals were obtained from Sigma Aldrich, unless stated otherwise. The chemicals were used as received.

**Methods**

Salt solubility

The salt solubility was determined by visual inspection of a 1.5 mol/kg mixture of the salt and water.

Criteria:

Clear solution : solubility Yes
Turbid solution or sediments : solubility No

Viscosity

The viscosity is measured using a Haake Rheometer, type Haake Rheostress RS 600, with a flat plate geometry at a temperature of 25°C unless otherwise indicated. The viscosity is measured at shear rates ($\dot{\gamma}$) of between in the range of between 10 $s^{-1}$ and 1000 $s^{-1}$, unless otherwise indicated.

Experiments 1-19 : preparation of aqueous Mg-salt solutions

The magnesium salts of the acids as mentioned in Table 1 were dissolved in demineralized water, such that the concentration of the magnesium salt was 1.5 mol/kg. If the solution passed the 'smell' test, the solubility was (visually) evaluated. If a clear solution was obtained, the viscosity of the solution was measured according to the method disclosed above. Mg-sulfate and Mg-nitrate (experiments 1 and 2) were used as references.

As can be deduced from Table 1, only experiments 1, 2 (both references), 8, 10, 14 and 15 pass the smell and solubility tests. Therefore, Mg-itaconate, Mg-succinate, Mg-levulinate and Mg-adipate are suitable alternatives for Mg-sulfate and Mg-nitrate with regards to smell and salt solubility. However, the Mg-levulinate and Mg-adipate solutions show a viscosity outside the jettable range, which is typically between 2 and 8 mPas (note: a viscosity of the salt solution that is too low can be increased by adding a viscosity modifier. Decreasing the viscosity is impossible)

Therefore, it can be concluded that Mg-succinate and Mg-itaconate are food-safe, non-smelling and non-yellowing coagulation agents in accordance with the present invention. The use thereof in pre-treatment liquids for inkjet printing and a pre-treatment liquid comprising such coagulation agents satisfy the object of the present invention.

Comparative Example A: preparation of a pre-treatment liquid comprising $Mg(NO_3)_2$

33.33 grams of Magnesium Nitrate hexahydrate ($Mg(NO_3)_2$•$6H_2O$, 20 grams of glycerol, 0.75 grams of Na-octyl sulfate (surfactant) and 5.48 grams of aqueous pH modifier premix was added to 40.44 grams of demineralized water to obtain a pre-treatment liquid comprising 19.28 wt% anhydrous $Mg(NO_3)_2$ with respect to the total composition, which is equal to 1.3 mol/kg $Mg(NO_3)_2$ with respect to the total composition.

Comparative Example B: preparation of a pre-treatment liquid comprising $MaSO_4$

32 grams of Magnesium sulfate heptahydrate ($MgSO_4$•$7H_2O$), 10 grams of glycerol, 0.75 grams of Na-octyl sulfate (surfactant) and 5.48 grams of aqueous pH modifier premix pH was added to 51.77 grams of demineralized water to obtain a pre-treatment liquid comprising 15.63 wt% anhydrous $MgSO_4$ with respect to the total composition, which is equal to 1.3 mol/kg $MgSO_4$ with respect to the total composition.

Table 1: results of experiments 1-19

| Exp. | Mg-salt acid | Smell (Yes/No) | Mg-salt solubility at 1.5 mol/kg (Yes/No) | Viscosity [mPas] |
|---|---|---|---|---|
| 1 | Sulfuric | No | Yes | 3.2 |
| 2 | Nitric | No | Yes | 4.6 |
| 3 | Acetic | Yes | | |
| 4 | Formic | Yes | | |
| 5 | Lactic | No | | |
| 6 | Propionic | Yes | | |
| 7 | Tartaric | No | | |
| 8 | Itaconic | No | Yes | 5.5 |
| 9 | Butyric | Yes | | |
| 10 | Succinic | No | Yes | 5.0 |
| 11 | Fumaric | No | | |
| 12 | Sorbic | No | | |
| 13 | Glutaric | No | | |
| 14 | Levulinic | No | Yes | 10.3 |

(continued)

| Exp. | Mg-salt acid | Smell (Yes/No) | Mg-salt solubility at 1.5 mol/kg (Yes/No) | Viscosity [mPas] |
|---|---|---|---|---|
| 15 | Adipic | No | Yes | 8.8 |
| 16 | Malonic | No | | |
| 17 | Gluconic | No | | |
| 18 | Malic | No | | |
| 19 | Pimelic | No | | |

Example 1: preparation of a pre-treatment liquid comprising Mg-succinate

15.35 grams of succinic acid, 7.58 grams of magnesium hydroxide ($Mg(OH)_2$), 2.5 grams of glycerol, 0.75 grams of Na-octyl sulfate (surfactant) and 1.13 grams of pH modifier was added to 72.7 grams of demineralized water to obtain a pre-treatment liquid comprising 18.25 wt% anhydrous Mg-succinate with respect to the total composition, which is equal to 1.3 mol/kg Mg-succinate with respect to the total composition.

Example 2: preparation of a pre-treatment liquid comprising Mg-itaconate

16.91 grams of itaconic acid, 7.58 grams of magnesium hydroxide ($Mg(OH)_2$), 0.75 grams of Na-octyl sulfate (surfactant) and 1.21 grams of pH modifier was added to 73.6 grams of demineralized water to obtain a pre-treatment liquid comprising 19.8 wt% anhydrous Mg-itaconate with respect to the total composition, which is equal to 1.3 mol/kg Mg-succinate with respect to the total composition.

The viscosities of the pre-treatment compositions prepared in Comparative Examples A and B and Examples 1 and 2 were tuned with glycerol in order to obtain comparable viscosities (see Table 2). The pH has been adjusted to pH = 7.5, for all pre-treatment liquids. The static (bubble lifetime of 2 seconds) and dynamic (bubble lifetime of 50 ms) have been measured and are stated in Table 2.

Table 2: pre-treatment compositions according to Comparative Examples A and B and Examples 1 and 2

| Compositions | | | | |
|---|---|---|---|---|
| (Comp.) Example | A | B | 1 | 2 |
| Salt | $Mg(NO_3)_2$ | $MgSO_4$ | Mg-succinate | Mg-itaconate |
| Salt content [wt%] (all 1.3 mol/kg) | 19.27 | 15.63 | 18.25 | 19.81 |
| Glycerol [wt%] | 20 | 10 | 2.5 | 0 |
| Surfactant [wt%] | 0.75 | 0.75 | 0.75 | 0.75 |
| pH modifier [wt%] | 0.78 | 0.78 | 1.13 | 1.21 |
| Water [wt%] | 59.20 | 72.84 | 77.37 | 78.23 |
| properties | | | | |
| pH | 7.5 | 7.5 | 7.5 | 7.5 |
| Viscosity [mPas] | 4.2 | 4.5 | 4.6 | 4.5 |
| Surface Tension 50 ms [mN/m] | 29.6 | 33.3 | 32.1 | 32.0 |
| Surface tension 2 s [mN/m] | 24.8 | 27.5 | 26.9 | 26.8 |

Printing experiments were performed by application of the pre-treatment liquids according to Comparative Examples A and B and Examples 1 and 2 in various amounts (g/$m^2$) on two media types: MetsäBoard Prime WKL obtained from Metsä and RiegerCoat Economic, obtained from Hamburger containerboard. Subsequently, at least one solid area comprising 10 g/$m^2$ of at least one ink composition (see Table 3) was applied on top of the pre-treated print substrate. The following parameters were evaluated:

Table 3: ink compositions used in the printing experiments

| Component [wt%] | Yellow | blacK |
|---|---|---|
| Latex: NeoCryl XK205 | 12* | 12 |
| Glycerol | 17.5 | 15 |
| Surfynol 440 | 0.99 | 0.99 |
| Pigment: Fuji-ADP1000 pigments | 3.1* | 2.9 |
| demiwater | balance | balance |
| wt% solids w.r.t. total ink composition | | |

Bleeding

Bleeding or color bleeding refers to the phenomenon that adjacent printed images of different color run into one another.

In accordance with the above-described printing experiments, different amounts (g/$m^2$) of the exemplified pre-treatment liquids were applied to a surface of the tested print substrates. Subsequently, solid areas with at least two different colored inks (Yellow and black) were printed directly adjacent to one another in an amount of 10 g/$m^2$ on top of the pre-treated print substrate. The minimum amount of primer coverage at which no (color) bleeding occurred was visually detected. The results are presented in Table 4.

Pinning performance

In accordance with the above-described printing experiments, different amounts (g/$m^2$) of the exemplified pre-treatment liquids were applied to a surface of the tested print substrates. Subsequently a solid area of 10 g/$m^2$ ink was printed on top of the pre-treated print substrate. 0.3 seconds after printing the ink, a 1 bar air flow was applied to the printed area via a nozzle (impingement). By visual inspection it was determined whether or not the ink is blown away by the air flow.

Criteria:

0 = reference
< = slightly worse than reference
« = worse than reference
> = slightly better than reference
» better than reference

2D noise (mottle)

Print mottle refers to the uneven or cloudy appearance in printed material. It occurs when ink is not applied uniformly or when ink is not absorbed uniformly into the print substrate. This leads to visible variations in color density.

The degree of mottle is visually observed for print samples created as described above.

Criteria:

0 = mottle free
1 = almost mottle free

The evaluation results of the print experiments are shown in Table 4.

Bleeding

Both Mg-itaconate and Mg-succinate containing pre-treatment liquids show higher minimum pre-treatment load

on the selected media compared to Mg-nitrate and Mg-sulfate in view of prevention of (color) bleeding.

Pinning performance

The pinning performances of the pre-treatment liquids in accordance with Comparative Example A and Examples 1 and 2 were assessed relative to the pinning performance of Comparative Example B, which is used as a reference (see Table 4). From Table 4 it can be concluded that the pinning performance of both Mg-succinate and Mg-itaconate containing pre-treatment liquids is slightly worse than the $MgSO_4$ containing pretreatment liquid.

2D Noise (mottle)

For the pre-treatment liquids according to the Examples 1 and 2 the observed mottle is comparable to the mottle observed for a pre-treatment liquid comprising $MgSO_4$.

In conclusion, printing experiments show that both Mg-succinate and Mg-itaconate containing pre-treatment liquids showed good primer properties and good print quality results. Hence, Mg-succinate and Mg-itaconate are considered to be good alternatives for $MgSO_4$ and both are listed as Food Contact Materials (FCM).

Table 4: Evaluation results of printing experiments

| (Comp.) Example | Bleeding free coverage on Prime WKL[1] [$g/m^2$] | Bleeding free coverage on RiegerCoat Economic[2] [$g/m^2$] | Pinning Performance Prime WKL[1] | 2D noise (Mottle) |
|---|---|---|---|---|
| A | 1.1 | 1.5 | » | 0 (at 2.0 $g/m^2$)[3] |
| B | 1.4 | 1.9 | 0 | 1 |
| 1 | 1.5 | >2 | < | 1 |
| 2 | 1.6 | 2.0 | < | 1 |

[1]MetsäBoard Prime WKL obtained from Metsä
[2]RiegerCoat Economic obtained from Hamburger containerboard.
[3]a minimum pre-treatment coverage of 2.0 $g/m^2$ is required to obtain mottle free prints.

## Claims

1. A pre-treatment liquid for use in inkjet printing applications comprising a polyvalent metal itaconate salt.

2. Pre-treatment liquid according to claim 1 wherein the polyvalent itaconate salt is magnesium itaconate.

3. Pre-treatment liquid according to any one of the preceding claims, wherein the polyvalent metal itaconate salt is present in an amount of between 10 wt% and 60 wt%, relative to the total aqueous inkjet composition.

4. Use of polyvalent metal itaconate salt or a polyvalent metal succinic salt as a food-safe, non-smelling, non-yellowing coagulation agent in a pre-treatment liquid for use in inkjet printing.

5. Method of printing comprising the steps of:

    a. treating a print substrate by applying a pre-treatment liquid according to any one of claims 1-3 onto a surface of the print substrate;
    b. subsequently applying an aqueous ink composition comprising an aqueous resin dispersion and/or a colorant onto the treated print substrate obtained in step a.

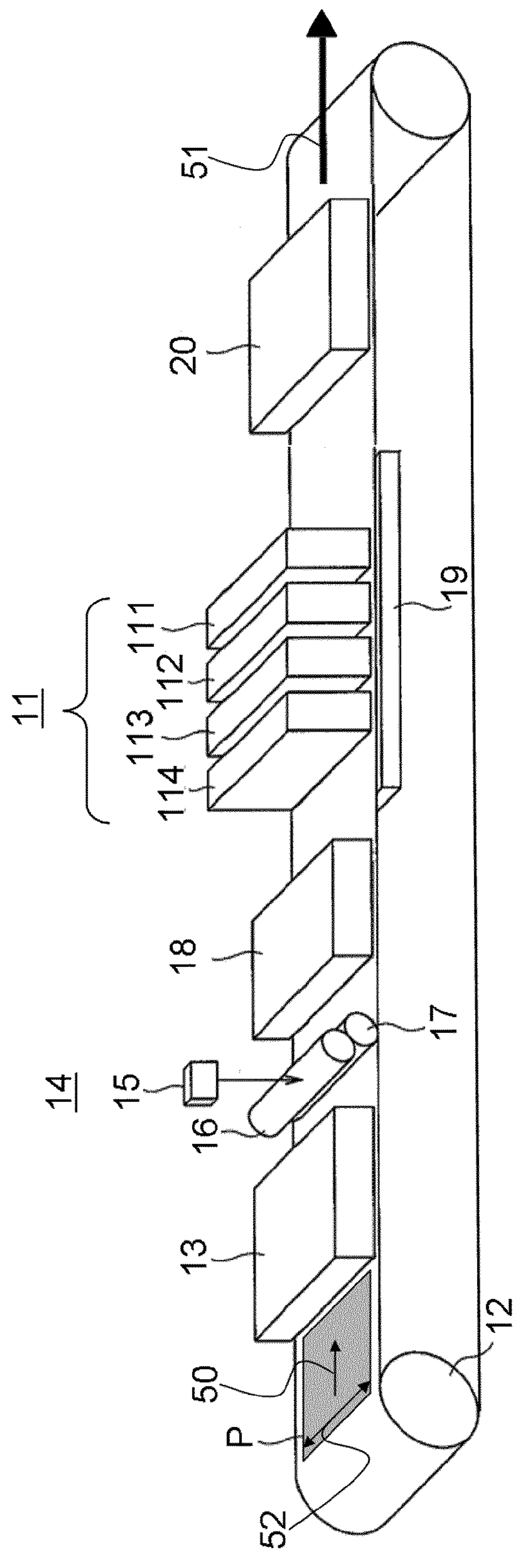


Fig. 1

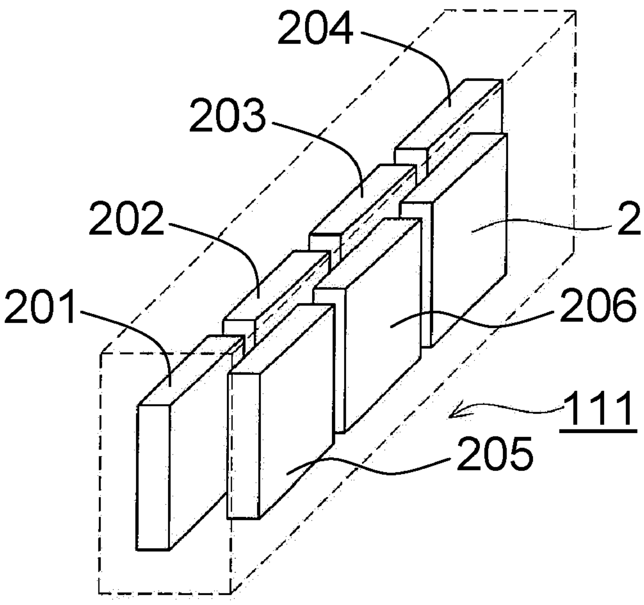


Fig. 2A

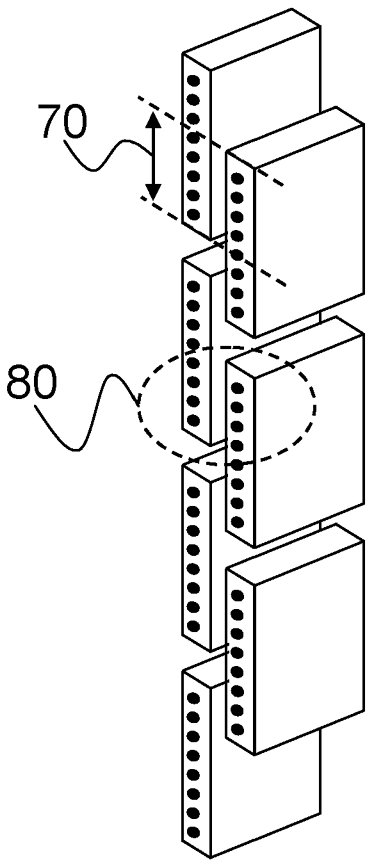


Fig. 2B

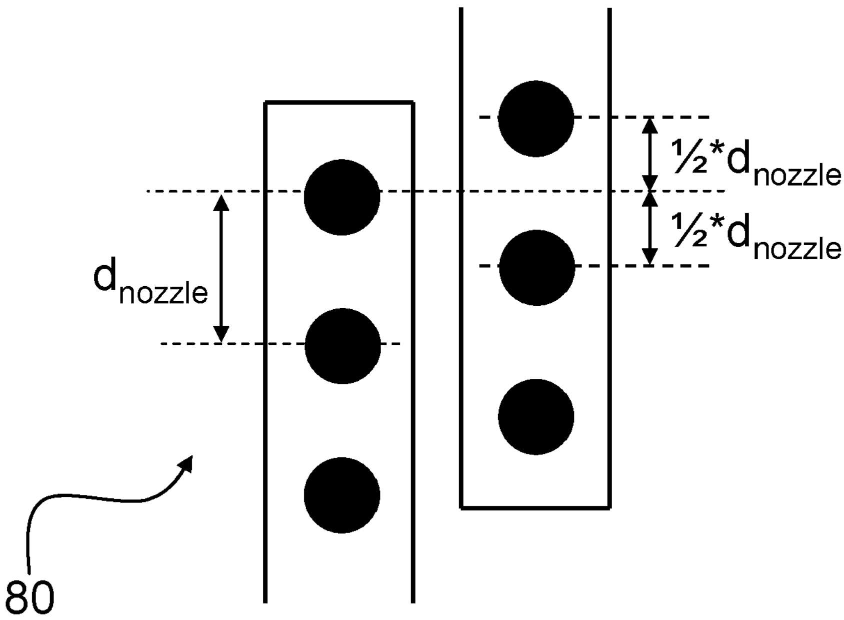


**Fig. 2C**

Europäisches Patentamt
European Patent Office
Office européen des brevets

# EUROPEAN SEARCH REPORT

Application Number
EP 23 20 3495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | JP 2001 328343 A (ASAHI GLASS CO LTD) 27 November 2001 (2001-11-27)<br>* examples * | 1-3,5<br>4 | INV.<br>C09D11/54<br>C09D11/38<br>C09D11/40 |
| A | US 2023/145299 A1 (ASAKAWA YUTA [JP]) 11 May 2023 (2023-05-11)<br>* examples; table 1 * | 1-5 | |
| A | US 2010/201736 A1 (OOISHI YASUFUMI [JP] ET AL) 12 August 2010 (2010-08-12)<br>* claims; examples * | 1-5 | |
| A | CN 116 640 490 A (SHANGHAI WUYOUSHU NEW MATERIAL TECH CO LTD) 25 August 2023 (2023-08-25)<br>* examples * | 1-5 | |
| A,D | US 2012/314000 A1 (SARKISIAN GEORGE [US] ET AL) 13 December 2012 (2012-12-13)<br>* examples * | 1-5 | |

TECHNICAL FIELDS SEARCHED (IPC)

C09D

The present search report has been drawn up for all claims

1

| Place of search | Date of completion of the search | Examiner |
|---|---|---|
| Munich | 14 March 2024 | Schmitz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 20 3495

This annex lists the patent family members relating to the patent documents cited in the above-mentioned European search report. The members are as contained in the European Patent Office EDP file on
The European Patent Office is in no way liable for these particulars which are merely given for the purpose of information.

14-03-2024

| Patent document cited in search report | | Publication date | Patent family member(s) | | | Publication date |
|---|---|---|---|---|---|---|
| JP 2001328343 | A | 27-11-2001 | JP | 4298892 | B2 | 22-07-2009 |
| | | | JP | 2001328343 | A | 27-11-2001 |
| US 2023145299 | A1 | 11-05-2023 | JP | 2023069247 | A | 18-05-2023 |
| | | | US | 2023145299 | A1 | 11-05-2023 |
| US 2010201736 | A1 | 12-08-2010 | JP | 2010184413 | A | 26-08-2010 |
| | | | US | 2010201736 | A1 | 12-08-2010 |
| CN 116640490 | A | 25-08-2023 | NONE | | | |
| US 2012314000 | A1 | 13-12-2012 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080092309 A
- US 20070054981 A
- US 20120314000 A
- US 20120019588 A
- US 20140055520 A